# EUROPÄISCHE PATENTSCHRIFT

(11) **EP 1 432 061 B1**
(45) Veröffentlichungstag und Bekanntmachung des Hinweises auf die Patenterteilung: **17.02.2010**
(21) Anmeldenummer: 03027792.5
(22) Anmeldetag: 03.12.2003
(51) Int. Cl.: H01M 10/48, H01M 2/12, H01M 2/04

(54) **Diagnosesonde für eine Mehrzellen-Batterie**
Diagnostic probe for a multi-cell battery
Sonde diagnostique pour une battérie multi-éléments

(30) Priorität: 03.12.2002 DE 20218730 U
(43) Veröffentlichungstag der Anmeldung: 23.06.2004
(60) Teilanmeldung: 05008203.1
(73) Patentinhaber: Akkumulatorenfabrik Moll GmbH & Co. KG, 96231 Staffelstein (DE); Banner GmbH, 4021 Linz (AT)
(72) Erfinder: Dr Gelbke, Manfred, 96231 Bad Staffelstein (DE); Schumann, Dipl-Ing (FH), 96253 Untersiemau (DE); Holzleitner, Peter, 4030 Linz (AT); Maleschitz, Norbert, 4609 Thalheim bei Weis (AT)
(74) Vertreter: Naumann, Ulrich

(56) Entgegenhaltungen:
- WO-A-95/19050
- DE-A- 3 444 011
- DE-U- 9 015 535
- DE-U- 9 101 356
- DE-U- 20 218 730
- DE-U- 29 722 131
- DE-U- 29 821 994

## Beschreibung

Die Erfindung betrifft eine Diagnosesonde für eine Batterie, insbesondere eine Mehrzellen-Batterie, insbesondere eine Starterbatterie für ein Kraftfahrzeug oder sonstiges Fahrzeug. Die Erfindung betrifft ferner einen Bausatz, bestehend aus einer Diagnosesonde und einem oder mehreren Stopfen, insbesondere Gewindestopfen. Weiterhin betrifft die Erfindung einen Batteriedeckel. Die Erfindung betrifft ferner eine Batterie, insbesondere eine Mehrzellen-Batterie, insbesondere eine Starterbatterie für ein Kraftfahrzeug oder sonstiges Fahrzeug.

Aus der DE-GM 90 15 535 ist eine Batterie bekannt, die ein Batteriegehäuse und einen Batteriedeckel aufweist. In dem Batteriegehäuse sind mehrere, nämlich sechs Zellen vorgesehen. Ferner ist mindestens eine Öffnung vorhanden, die dazu dient, die aus den Zellen austretenden Gase abzuleiten.

Aus der DE-OS 34 44 011 ist eine sogenannte Kamina-Batterie bekannt. In dem Deckel der zentralentgasten Kamina-Batterie befindet sich jeweils eine Öffnung für jede der sechs Zellen, die dazu dient, Schwefelsäure in die jeweilige Zelle einzufüllen. Die Öffnungen der Zellen werden durch jeweils einen Gewindestopfen verschlossen, in dem jeweils eine O-Ring-Dichtung zum Schutz gegen Gas- und Säureaustritt vorgesehen ist.

Eine Diagnosesonde der eingangs angegebenen Art ist aus der DE-GM 298 21 994 bekannt. Die Diagnosesonde umfaßt einen Sondenkörper, an dem eine Linse mit mindestens einer Schwimmerkugel, ein Gewinde und ein Einschraubkopf vorgesehen sind. An dem Einschraubkopf sind eine Dichtung, nämlich eine O-Ring-Dichtung, und eine klauenförmige Vertiefung oder eine schlitzförmige Vertiefung mit einer zentralen Aussparung vorgesehen. Sondenkörper, Linse und Einschraubkopf sind aus einem Stück gefertigt. Am unteren Ende der Linse befindet sich ein Kunststoffbehälter, in dem die Schwimmerkugel vorgesehen ist. Wenn sich der Säurestand in der Batterie zwischen dem vorgegebenen Minimum und dem vorgegebenen Maximum befindet, liegt die Kugel im oberen Bereich des Kunststoffbehälters, wo sie von außen sichtbar ist. Wenn der Säurestand in der Batterie unter das Minimum absinkt, rollt die Kugel nach unten. Die hierdurch hervorgerufene Farbveränderung kann von außerhalb der Batterie wahrgenommen werden. Die Diagnosesonde nach der DE-GM 298 21 994 kann in eine Einfüllöffnung im Batteriedeckel eingebracht, insbesondere eingeschraubt, werden.

Die DE-U-297 22 131 offenbart eine Diagnosesonde für eine Mehrzellenbatterie mit einem Sondenkörper, an dem eine Linse mit mindestens einer Schwimmerkugel, ein Gewinde und ein Einschraubkopf vorgesehen sind.

Aus der DE-A-34 44 011 ist eine Mehrzellen-Batterie, insbesondere eine Starter-Batterie für ein Kraftfahrzeug, bekannt, bei der zwecks Herbeiführung eines Druckausgleichs zwischen einem die Zellen verbindenden Kanal und dem Innenraum wenigstens einer Zelle eine Öffnung zum Rücklauf von Säure in die Zelle angeordnet ist.

Die WO-A-95/19050 offenbart einen Batteriedeckel mit integriertem Entgasungssystem.

Aus der DE-U-90 15 535 ist eine Batterie bekannt, die einen Deckel mit einer Öffnung aufweist, in die eine Explosionsschutzfritte eingesetzt ist.

Aufgabe der Erfindung ist es, eine verbesserte Diagnosesonde für eine Batterie, insbesondere eine Mehrzellen-Batterie, vorzuschlagen.

Erfindungsgemäß wird diese Aufgabe durch die Merkmale des Anspruchs 1 gelöst. Die Diagnosesonde umfaßt einen Grundkörper, eine darin angeordnete Seele und eine oder mehrere Weichkomponentendichtungen zwischen dem Grundkörper und der Seele. Die Seele ist insbesondere aus einem durchsichtigen Material gefertigt, vorzugsweise aus Kunststoff, beispielsweise aus Acrylglas. Sie kann als prismatische Kunststoff-Linse ausgebildet sein. Der Grundkörper ist vorzugsweise aus Kunststoff gefertigt, vorzugsweise aus hartem Kunststoff. Er kann die "Hartkomponente" der Diagnosesonde bilden. Der Grundkörper und die Weichkomponentendichtungen werden vorzugsweise im sogenannten 2K-Verfahren (Zwei-Kunststoff-Komponenten-Verfahren) gefertigt, wobei der Grundkörper die Hartkomponente bildet und die Weichkomponentendichtungen die Weichkomponente bilden. An der Außenseite der Seele sind einer oder mehrere Wulste vorgesehen, die in die Weichkomponentendichtung eindrückbar sind. Die Wulste können eine flache und eine steile Flanke aufweisen. Sie können insbesondere derart ausgestaltet sein, daß sie nach Art eines Widerhakens wirken.

Vorteilhafte Weiterbildungen sind in den Unteransprüchen beschrieben.

Vorzugsweise sind an der Außenseite des Grundkörpers eine oder mehrere Weichkomponentendichtungen vorgesehen. Hierdurch kann eine Abdichtung zum Batteriegehäuse oder zum Batteriedeckel realisiert werden.

Vorteilhaft ist es, wenn eine oder mehrere oder alle Weichkomponentendichtungen an den Grundkörper angespritzt sind.

Eine weitere vorteilhafte Weiterbildung ist dadurch gekennzeichnet, daß in dem Grundkörper ein Verbindungskanal für die Weichkomponente vorgesehen ist. Hierdurch wird der Herstellungsvorgang vereinfacht. Insbesondere kann erreicht werden, daß nur ein einziger Anspritzpunkt für die Weichkomponente erforderlich ist.

Eine weitere vorteilhafte Weiterbildung ist dadurch gekennzeichnet, daß die Weichkomponentendichtung zwischen dem Grundkörper und der Seele als durchgehende Innendichtung ausgestaltet ist.

Nach einer weiteren vorteilhaften Weiterbildung ist die Seele, insbesondere der Seelenkörper, mit einem Kragen versehen, der in dem Grundkörper, insbesondere am unteren Ende eines Ansatzes des Grundkörpers, fixierbar ist.

In dem Grundkörper kann ein Entgasungsloch vorgesehen sein. Dies ist insbesondere dann vorteilhaft, wenn die Diagnosesonde in einer Batterie nach Art der eingangs beschriebenen Kamina-Batterie eingesetzt werden soll.

Vorzugsweise umfaßt die Diagnosesonde einen Kopf, an dem eine Dichtung vorgesehen ist, wobei die Dichtung eine radial nach außen weisende Dichtlippe aufweist. Hierdurch kann der Schutz gegen einen elektrischen Ladungsdurchschlag verbessert werden. Innerhalb der Batterie können sich explosive Dämpfe befinden. Wenn an der Außenseite der Batterie eine elektrische Ladung aufgebracht wird, beispielsweise dadurch, daß eine Person, die eine elektrische Ladung aufgenommen hat, die Batterie berührt, besteht die Gefahr eines elektrischen Ladungsdurchschlags und einer Explosion. Diese Gefahr ist im Bereich der Stopfen und Diagnosesonden besonders groß. Sie wird durch die erfindungsgemäße Dichtung erheblich vermindert.

Vorteilhaft ist es, wenn die Dichtlippe derart verformbar ist, daß sie eine ebene, mit der Oberfläche des Stopfens bzw. der Diagnosesonde fluchtende Fläche bildet.

Vorzugsweise weist die Dichtung einen radialen Bereich auf.

Stattdessen oder zusätzlich kann die Dichtung einen axialen Bereich aufweisen.

Nach einer weiteren vorteilhaften Weiterbildung ist im Abstand von der Dichtung eine weitere Dichtung vorgesehen. Bei der weiteren Dichtung handelt es sich vorzugsweise um eine radiale Dichtung.

Ein Bausatz gemäß der Erfindung besteht aus einer erfindungsgemäßen Diagnosesonde und einem oder mehreren Stopfen, insbesondere Gewindestopfen. Erfindungsgemäß ist der Gewindestopfen mit dem Werkzeug für die Diagnosesonde und einem Werkzeugwechseleinsatz herstellbar.

Ein erfindungsgemäßer Batteriedeckel ist gekennzeichnet durch eine erfindungsgemäße Diagnosesonde und/oder einen erfindungsgemäßen Bausatz.

Eine vorteilhafte Weiterbildung des erfindungsgemäßen Batteriedeckels ist dadurch gekennzeichnet, daß im Bereich der Dichtlippe und/oder des axialen Bereichs der Dichtung Schneiden oder Dichtkanten vorgesehen sind.

Die Erfindung betrifft schließlich eine Batterie, die durch eine erfindungsgemäße Diagnosesonde und/oder einen erfindungsgemäßen Bausatz und/oder einen erfindungsgemäßen Batteriedeckel gekennzeichnet ist.

Ausführungsbeispiele der Erfindung werden nachstehend anhand der beigefügten Zeichnung im einzelnen erläutert. In der Zeichnung zeigt
- Fig. 1: eine erste Ausführungsform einer Diagnosesonde, die zum Einbau in eine Kamina-Batterie geeignet ist, in einer Seitenansicht, teilweise im Schnitt,
- Fig. 2: eine Abwandlung der Ausführungsform gemäß Fig. 1, die zum Einbau in eine Batterie mit einem Batteriedeckel, der aus einem Unterdeckel und einem Oberdeckel besteht (Doppeldeckel), geeignet ist, in einer Seitenansicht, teilweise im Schnitt,
- Fig. 3: eine zweite Ausführungsform einer Diagnosesonde für einen Doppeldeckel in einer seitlichen Schnittansicht,
- Fig. 4: den Grundkörper der Diagnosesonde gemäß Fig. 3 in einer seitlichen Schnittansicht,
- Fig. 5: einen Gewindestopfen für einen Doppeldeckel in einer seitlichen Schnittansicht,
- Fig. 6: eine dritte Ausführungsform einer Diagnosesonde für eine KaminaBatterie in einer teilweisen seitlichen Schnittansicht,
- Fig. 7: die Diagnosesonde gemäß Fig. 3 und 4 im eingebauten Zustand in einer seitlichen Schnittansicht,
- Fig. 8: eine vergrößerte Teilansicht der Fig. 7,
- Fig. 9: den Stopfen gemäß Fig. 5 in der Einbausituation vor dem vollständigen Einbau in einen Doppeldeckel,
- Fig. 10: eine der Fig. 9 entsprechende Darstellung mit vollständig eingeschraubtem Stopfen,
- Fig. 11: eine vergrößerte Teilansicht der Fig. 9,
- Fig. 12: eine vergrößerte Teilansicht der Fig. 10,
- Fig. 13: die Diagnosesonde gemäß Fig. 3 und 4 in der Einbausituation vor dem vollständigen Einbau in einen Doppeldeckel,
- Fig. 14: eine der Fig. 13 entsprechende Darstellung mit vollständig eingeschraubter Diagnosesonde,
- Fig. 15: einen Stopfen für eine Kamina-Batterie in der Einbausituation vor dem vollständigen Einbau in den Deckel der Kamina-Batterie und
- Fig. 16: eine der Fig. 15 entsprechende Darstellung mit vollständig eingeschraubtem Stopfen.

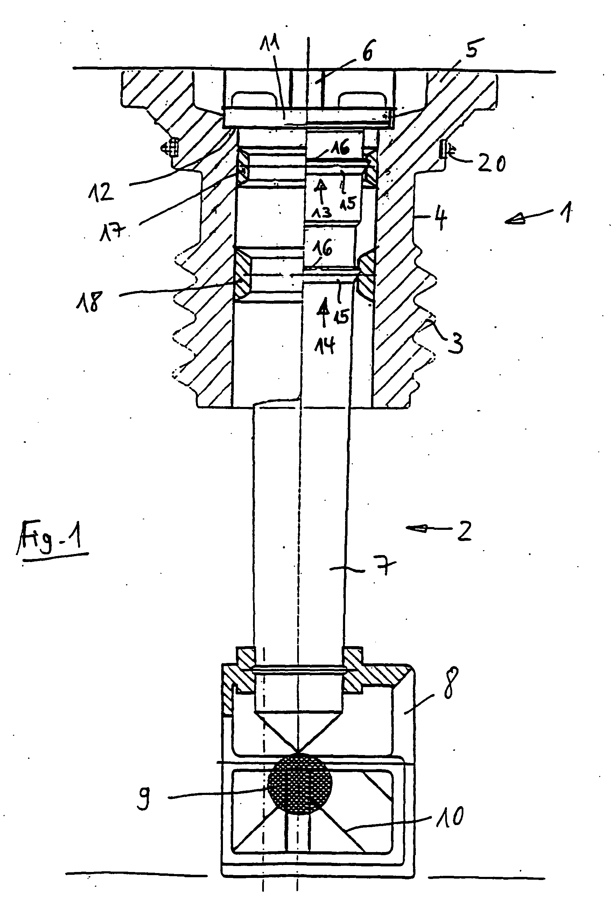

Die in Fig. 1 gezeigte erste Ausführungsform einer Diagnosesonde für eine Mehrzellen-Batterie, nämlich eine Starterbatterie für ein Kraftfahrzeug, ist insbesondere zum Einbau in die eingangs beschriebene Kamina-Batterie geeignet. Diese Ausführungsform umfaßt einen Grundkörper 1 und eine darin angeordnete Seele 2. Der Grundkörper 1 umfaßt ein Außengewinde 3, einen im Durchmesser verminderten Bereich 4 und einen Kopf 5. In der Mitte des Kopfes 5 ist eine kreuzschlitzförmige Vertiefung 6, wie in der DE-GM 298 21 994 beschrieben, vorgesehen, in die ein entsprechendes Werkzeug zum Einschrauben oder Herausschrauben des Grundkörpers 1 bzw. der Diagnosesonde eingreifen kann.

Die Seele 2 umfaßt einen Seelenkörper 7, der als Prisma ausgestaltet sein kann und der als Lichtleiter wirkt. Der Seelenkörper 7 verjüngt sich in Richtung nach unten. Am unteren Ende des Seelenkörpers 7 ist ein Korb 8 befestigt, in dem eine Schwimmerkugel 9 vorhanden ist, die beispielsweise eine grüne oder andere Farbe aufweist. Der Seelenkörper 7 kann aus Kunststoff gefertigt sein, insbesondere aus Acrylglas. Wenn der Säurestand in der Batterie unter ein vorgegebenes Minimum absinkt, rollt die Schwimmerkugel 9 längs der Schräge 10 im unteren Bereich des Korbes 8 nach unten. Sie befindet sich dann nicht mehr in der Verlängerung des Seelenkörpers 7, was von außen erkennbar ist, insbesondere als Farbveränderung.

Der Seelenkörper 7 weist an seinem oberen Ende einen Absatz 11 auf, der auf einem entsprechenden Absatz 12 in dem Grundkörper 1 aufliegt. Unterhalb des Absatzes 11 sind am Außenumfang des Seelenkörpers 7 eine erste Wulst 13 und eine zweite Wulst 14 vorgesehen, die jeweils eine flache Flanke 15 und eine steile Flanke 16 aufweisen. Die flachen Flanken 15 sind nach unten gewandt, die steilen Flanken 16 sind nach oben gewandt.

In dem Grundkörper 1, der unterhalb des Absatzes 12 im wesentlichen zylinderförmig durchgehend ausgestaltet ist, sind eine obere Weichkomponentendichtung 17 und eine untere Weichkomponentendichtung 18 vorgesehen. Die Weichkomponentendichtungen 17, 18 weisen von der zylinderförmigen Innenseite des Grundkörpers 1 nach innen . Sie sind umlaufend ausgebildet und haben einen im wesentlichen trapezförmigen Querschnitt. Die Weichkomponentendichtungen 17, 18 sind an den Grundkörper 1 angespritzt.

An der Außenseite des Grundkörpers 1 ist eine äußere Weichkomponentendichtung 20 vorgesehen, die an den Grundkörper 1 angespritzt ist. Diese äußere Weichkomponentendichtung 20 ist als radiale umlaufende Dichtung ausgebildet. Sie hat einen dreieckförmigen Querschnitt, dessen Spitze nach außen gerichtet ist und dessen Basis in einer Nut liegt, die in einem Bereich zwischen dem im Durchmesser verminderten Bereich 4 und dem Kopf 5 vorgesehen ist.

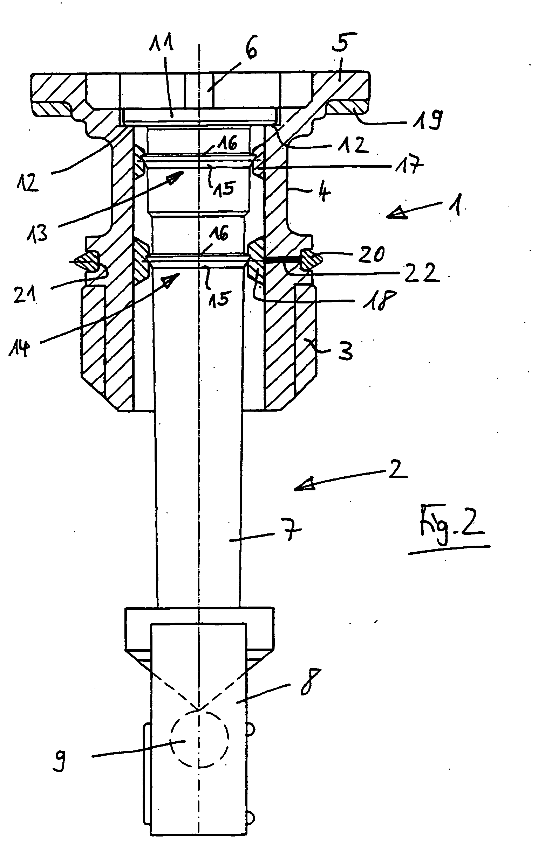

Fig. 2 zeigt eine Abwandlung der ersten Ausführungsform der Diagnosesonde, die insbesondere zum Einbau in eine Batterie mit einem Doppeldeckel geeignet ist, also zum Einbau in einen Batteriedeckel, der aus einem Unterdeckel und einem Oberdeckel besteht. Bei dieser Ausführungsform sind an der Außenseite des Grundkörpers 1 eine obere Weichkomponentendichtung 19 und eine untere Weichkomponentendichtung 20 vorgesehen, die jeweils an den Grundkörper 1 angespritzt sind. Die obere äußere Weichkomponentendichtung 19 ist als axiale Dichtung ausgebildet. Sie liegt unterhalb des Kopfes 5. Die untere äußere Weichkomponentendichtung 20 ist als radiale umlaufende Dichtung ausgebildet. Sie hat einen dreieckförmigen Querschnitt, dessen Spitze nach außen gerichtet ist und dessen Basis in einer Nut 21 liegt, die in einem an das Außengewinde 3 anschließenden Bereich zwischen dem Außengewinde 3 und dem im Durchmesser verminderten Bereich 4 vorgesehen ist. Die äußere untere Weichkomponentendichtung 20 liegt der inneren unteren Weichkomponentendichtung 18 gegenüber. Von der Weichkomponentendichtung 20 führt ein Verbindungskanal 22 zur Weichkomponentendichtung 18. Hierdurch wird eine Verbindung zwischen den äußeren Weichkomponentendichtungen 19, 20 und den inneren Weichkomponentendichtungen 17, 18 hergestellt, durch die es ermöglicht wird, nur einen einzigen Anspritzpunkt für die Weichkomponentendichtungen 17-20 vorzusehen, der zwischen den Dichtungen 19, 20 liegen kann.

Bei den Ausführungsformen nach Fig. 1 und 2 drücken sich die Wulste 13, 14 mit ihrem Außenumfang in die Weichkomponentendichtungen 17, 18 ein. Ihre flachen Flanken 15 wirken beim Eindringen der Seele 2 in den Grundkörper 1 in Richtung nach unten als Einlaufschrägen. Die steilen Flanken 16 wirken im eingebrachten Zustand gemäß Fig. 1 und 2 wie Widerhaken.

Durch die Weichkomponentendichtungen 17-20 wird insbesondere eine Abdichtung gegen Säuren und Gase bewirkt. Ferner wird durch die Weichkomponentendichtungen 17-20 eine Fixierung der Seele 2 innerhalb des Grundkörpers 1 bewirkt. Dies erfolgt durch eine Einbettung der Wulste 13, 14 in die Weichkomponentendichtungen 17, 18 und durch den Hintergriff, der durch die steilen Flanken 16 erzeugt wird.

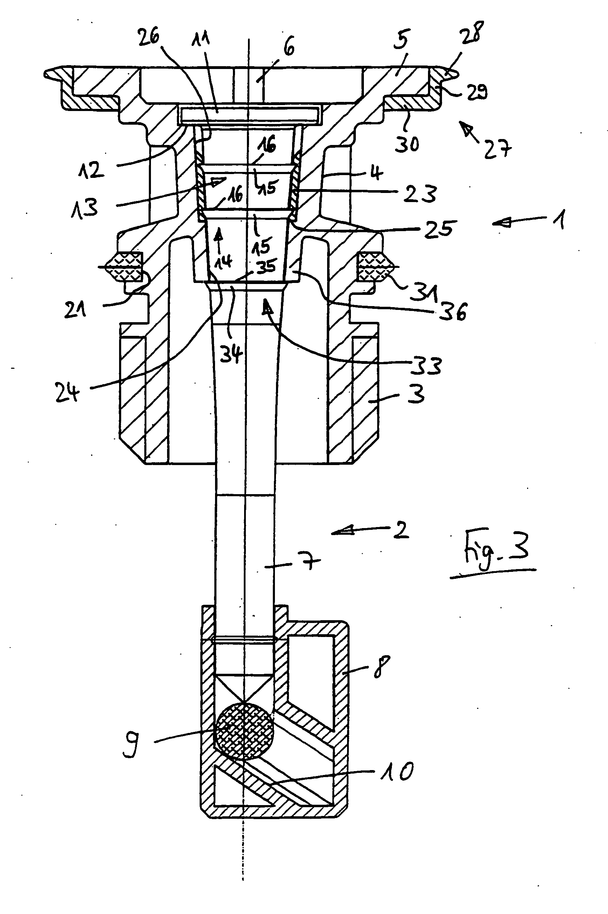

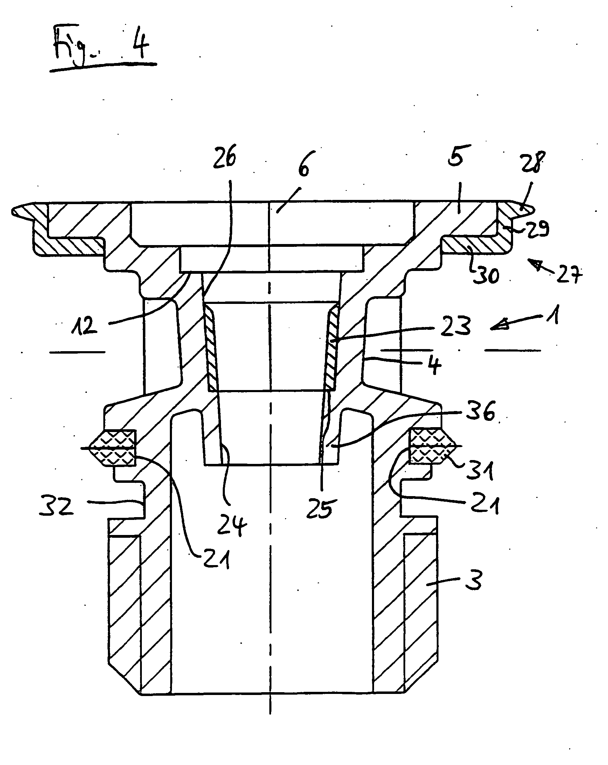

Bei der abgewandelten Ausführungsform, die in den Figuren 3 und 4 gezeigt ist, ist die Weichkomponentendichtung 23 zwischen dem Grundkörper 1 und der Seele 2 als durchgehende Innendichtung ausgestaltet. In dem Grundkörper 1 ist eine kegelförmige Innenfläche 24 vorhanden, die einen nach außen weisenden Absatz 25 aufweist, an dem die durchgehende Innendichtung 23 anliegt. Die kegelförmige Innenfläche 24 fluchtet mit der Innenfläche der Innendichtung 23. An den Absatz 25 schließt sich ein weiterer kegelförmiger Bereich 26 des Grundkörpers 1 an, an dem die Außenfläche der Innendichtung 23 anliegt.

An dem Kopf 5 des Grundkörpers 1 ist eine Dichtung 27 vorgesehen, die eine radial nach außen weisende Dichtlippe 28, einen daran anschließenden, radialen Bereich 29 und einen daran anschließenden axialen Bereich 30 aufweist. Die Dichtung 27 umfaßt den äußeren unteren Randbereich des Kopfes 5, wie insbesondere aus Fig. 3 und 4 ersichtlich. Am radial inneren Ende der Dichtlippe 28 beginnt der von dort nach unten weisende radiale Bereich 29, an dessen unteres Ende sich der axiale Bereich 30 in Richtung nach innen anschließt. Durch die Dichtung 27 wird ein verbesserter Schutz gegen einen elektrischen Ladungsdurchschlag erzeugt. Zum einen wird dieser Schutz durch die Dichtlippe 28 erzeugt, zum anderen durch die lange Strecke zwischen dem Kopf 5 und dem zugehörigen Batteriedeckel bzw. Batteriegehäuse, die durch die Dichtung 27, nämlich deren radialen Bereich 29 und deren axialen Bereich 30, ausgefüllt wird. Daraus ergibt sich eine lange Strecke für den Durchschlag einer elektrischen Ladung.

Die Dichtung 27 kann aus einer Weichkomponente hergestellt sein. Sie kann an den Grundkörper 1 angespritzt sein.

Im Abstand von der Dichtung 27 ist eine weitere äußere Dichtung 31 vorgesehen, die als Weichkomponente ausgestaltet sein kann. Die Dichtung 31 ist ähnlich der Dichtung 20 in Fig. 2 ausgestaltet, wobei allerdings zwischen dem Bereich, in dem sich die Nut 21 befindet, und dem Außengewinde 3 ein Zwischenbereich 32 mit einem geringeren Durchmesser vorgesehen ist.

Die Wulste 13, 14 drücken sich in die durchgehende Innendichtung 23. Unterhalb des unteren Wulstes 14 ist der Seelenkörper 7 mit einem Kragen 33 versehen, der eine flache Flanke 34 und eine steile Flanke 35 aufweist. Die nach unten weisende flache Flanke 34 wirkt als Einlaufschräge bei der Montage der Seele 2, die durch eine Bewegung nach unten erfolgt. Nach Erreichen der Endposition, die in Fig. 3 gezeigt ist, liegt der Absatz 11 der Seele 2 an dem Absatz 12 in dem Grundkörper 1 an. Ferner liegt in dieser Stellung die steile Flanke 35 am unteren Ende des Ansatzes 36, in dem die kegelförmige Innenfläche 24 vorgesehen ist, an, so daß die Seele 2 in dem Grundkörper 1 zuverlässig fixiert ist.

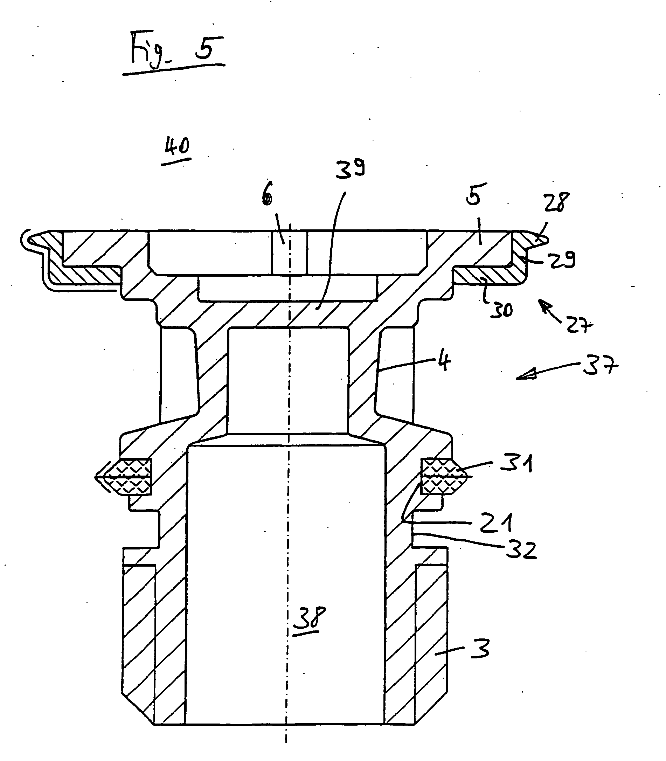

Fig. 5 zeigt einen Gewindestopfen für einen Doppeldeckel, der ähnlich wie der Grundkörper 1 der Ausführungsform gemäß Fig. 3 und 4 ausgestaltet ist. Im Unterschied zu dem Grundkörper 1 für die Diagnosesonde ist bei dem Gewindestopfen 37 der Innenraum 38 durch eine Wand 39 gegenüber der Außenseite 40 abgeschlossen. Die Dichtungen 27 und 31 sind bei dem Gewindestopfen 37 genauso ausgebildet wie bei der Diagnosesonde bzw. dem Grundkörper 1 gemäß Fig. 3 und 4. Der Gewindestopfen 37 ist mit dem Werkzeug für die Diagnosesonde bzw. den Grundkörper 1 der Ausführungsform gemäß Fig. 3 und 4 und einem Werkzeugwechseleinsatz herstellbar. Der Gewindestopfen 37 bzw. dessen Verschraubungsgrundkörper kann in dem Verschraubungswerkzeug für die Diagnosesonde bzw. den Grundkörper nach Fig. 3 und 4 über einen Werkzeugwechseleinsatz hergestellt werden. Der Gewindestopfen 37 und die Diagnosesonde bzw. der Grundkörper 1 gemäß Fig. 3 und 4 bilden einen Bausatz.

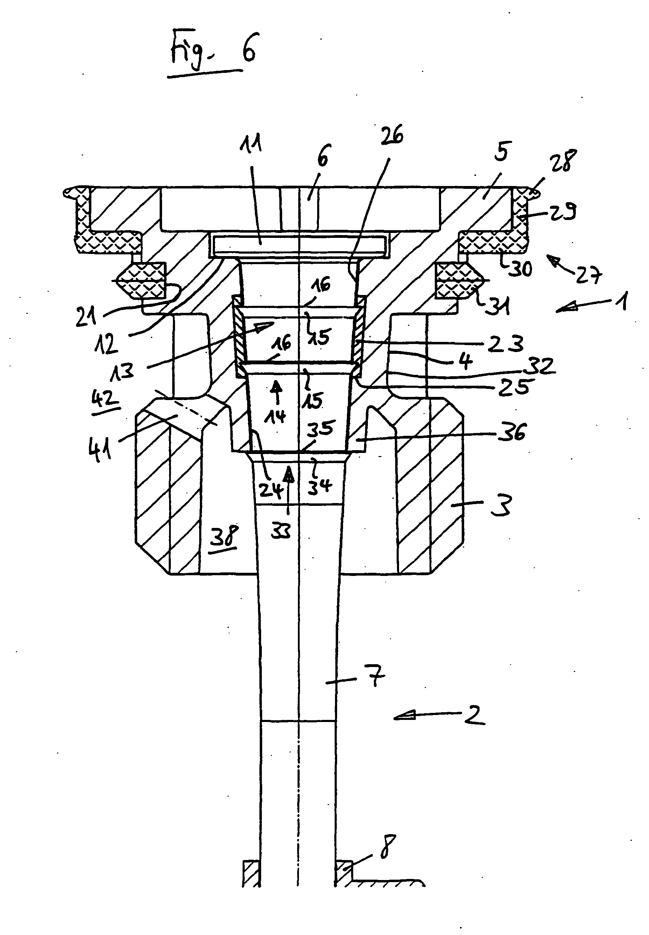

Fig. 6 zeigt eine weitere Ausführungsform einer Diagnosesonde, die insbesondere für die eingangs beschriebene Kamina-Batterie geeignet ist und bei der entsprechende Teile mit entsprechenden Bezugszeichen versehen sind. Hier ist oberhalb des Außengewindes 3 eine Entgasungsöffnung 41 vorhanden, die den Innenraum 38 des Grundkörpers 1 mit einem Entgasungskanal 42 verbindet.

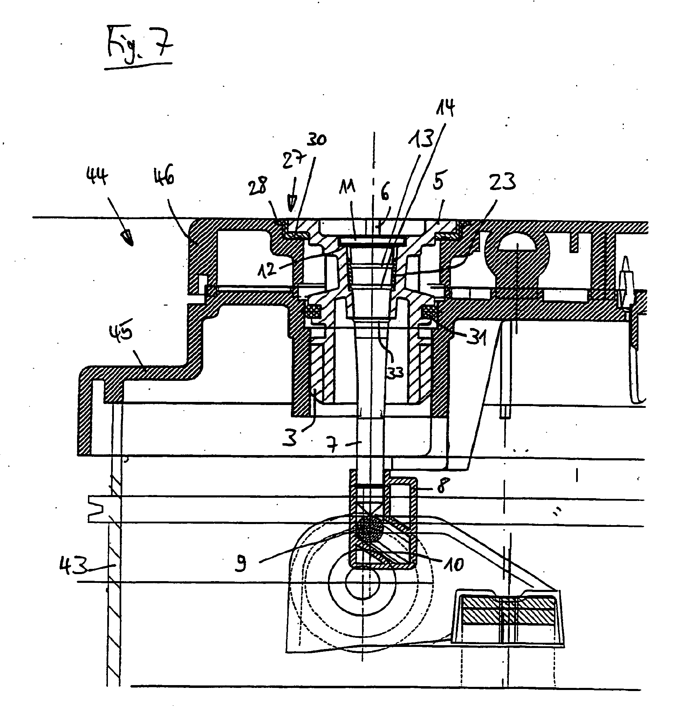

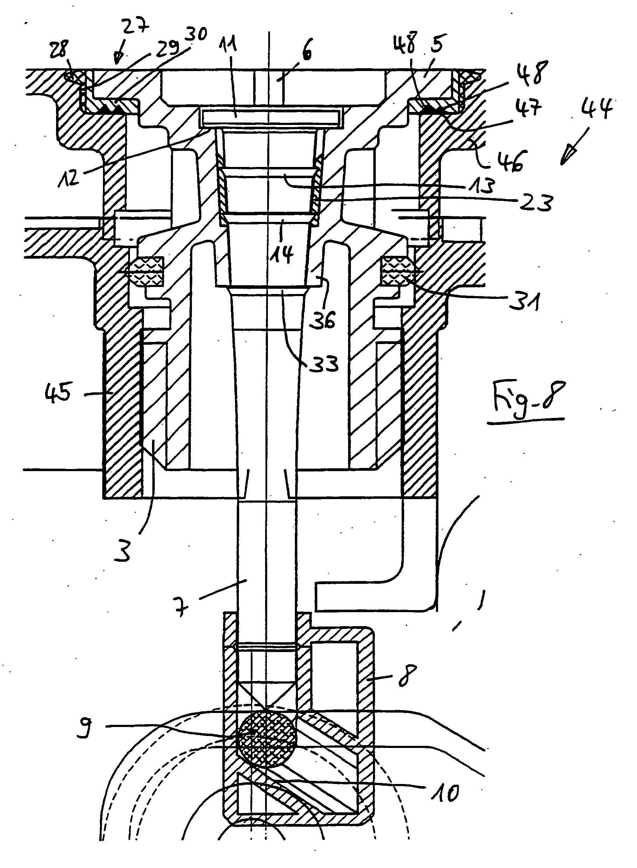

In Fig. 7 und 8 ist die Diagnosesonde gemäß Fig. 3 und 4 im eingebauten Zustand dargestellt. Das Batteriegehäuse 43 ist durch einen Batteriedeckel 44 geschlossen, der aus einem Unterdeckel 45 und einem Oberdeckel 46 besteht. Die Abdichtung gegenüber dem Unterdeckel 45 erfolgt durch die äußere untere Weichkomponentendichtung 31, die Abdichtung gegenüber dem Oberdeckel 46 erfolgt durch die obere äußere Weichkomponentendichtung 27.

Der axiale Bereich 30 der Dichtung 27 liegt auf einem entsprechenden Absatz 47 in dem Oberdeckel 46 auf. Auf der Oberfläche des Absatzes 47 sind ringförmige Schneiden 48 vorgesehen, die konzentrisch zueinander verlaufen und die einen im wesentlichen dreieckförmigen Querschnitt aufweisen, der mit der Spitze nach oben weist. Der Spitzenwinkel ist etwa 90°. Die Schneiden 48 drücken sich in den axialen Bereich 30 der Dichtung 27 ein, wodurch die Dichtwirkung weiter verbessert wird.

Die Weichkomponente kann aus TPE oder EPDM bestehen.

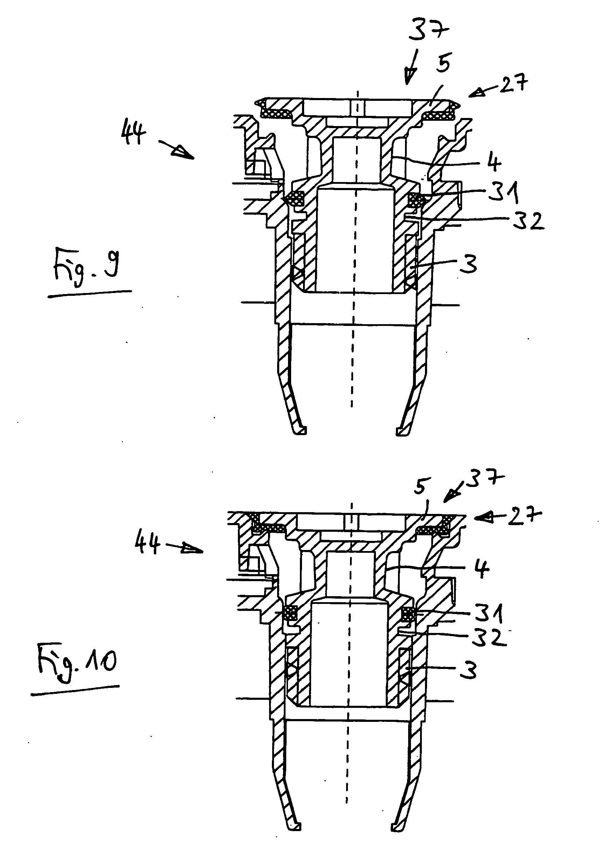

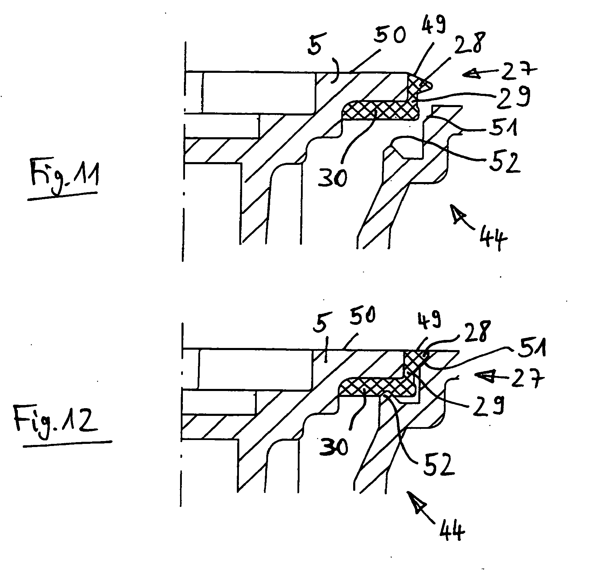

In Fig. 9 bis 12 ist die Einbausituation eines Stopfens gemäß Fig. 5 dargestellt. Fig. 9 zeigt die Eindrehsituation nach Beginn der Verschraubung. In Fig. 10 ist der vollständig eingeschraubte, fertig montierte Stopfen gezeigt. Die radial nach außen weisende Dichtlippe 28 hat ein dreieckförmiges Profil, dessen Spitze nach außen gerichtet ist und dessen obere Seitenfläche 49 in der insbesondere aus Fig. 11 ersichtlichen Weise zur Oberfläche 50 des Gewindestopfens 37 nach unten geneigt ist. Durch das vollständige Einschrauben des Gewindestopfens 37 wird die Dichtlippe 28 an einen entsprechenden schrägen Absatz 51 in den Batteriedeckel gedrückt, so daß die obere Seitenfläche 49 in der insbesondere aus Fig. 12 ersichtlichen Weise eine mit der Oberfläche 50 des Gewindestopfens 37 fluchtende Fläche bildet.

In dem Batteriedeckel 44 ist im Abstand von dem schrägen Absatz 51 eine nach oben weisende, abgerundete Dichtkante 52 vorgesehen, die sich im vollständig eingeschraubten Zustand des Gewindestopfens 37 gemäß Fig. 12 in den axialen Bereich 30 der Dichtung 27 eindrückt. Durch die Auflage der radialen Dichtlippe 28 wird eine erste Dichtbarriere gebildet. Durch die sich in den axialen Bereich 30 der Dichtung 27 eindrückende Dichtkante 52 wird eine zweite Dichtbarriere gebildet. Zwischen den beiden Dichtbarrieren verläuft der Batteriedeckel 44 im Abstand von der Dichtung 27. Durch den Abstand zwischen den beiden Dichtbarrieren entsteht ein säurefreier Bereich, dessen Länge eine erhöhte Sicherheit gegen elektrischen Durchschlag erzeugt. Diese erhöhte Sicherheit besteht auch dann, wenn die Batterie in eine Kipplage gerät.

Die radiale Dichtlippe 28 dichtet den Spalt zwischen dem Kopf 5 und dem entsprechenden umgebenden Randbereich des Batteriedeckels 44 ab. Dadurch wird eine im wesentlichen axial wirkende Dichtung geschaffen. Die nach außen weisende Dichtlippe 28 am Kopf 5 des Gewindestopfens 37 bildet auf diese Weise eine axiale Abdeckung für den Spalt zwischen dem Kopf 5 und der ihn umgebenden Öffnung in dem Batteriedeckel 44.

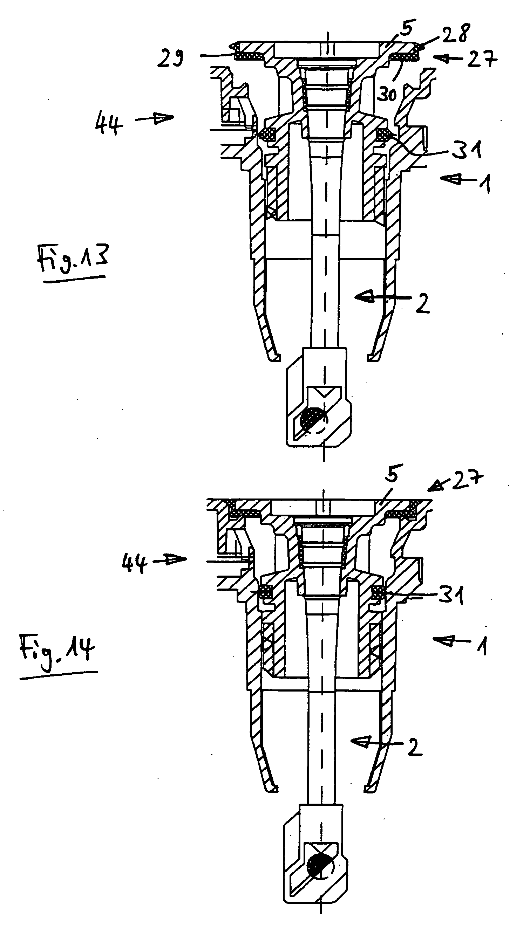

In den Fig. 13 und 14 ist die Einbausituation der Diagnosesonde gemäß Fig. 3 und 4 in zwei den Fig. 9 und 10 entsprechenden Darstellungen gezeigt.

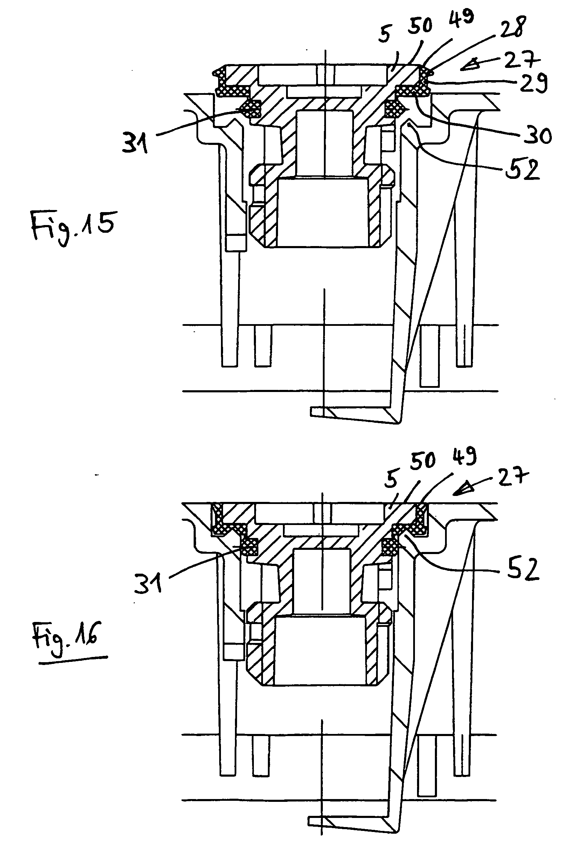

Die Fig. 15 und 16 zeigen entsprechende Darstellungen der Einbausituation eines Gewindestopfens für eine Kamina-Batterie.

## Patentansprüche

1. Diagnosesonde für eine Batterie, insbesondere eine Mehrzellen-Batterie,
**gekennzeichnet durch**
einen Grundkörper (1), eine darin angeordnete Seele (2) und eine oder mehrere Weichkomponentendichtungen (17, 18; 23) zwischen dem Grundkörper (1) und der Seele (2), wobei an der Außenseite der Seele (2) einer oder mehrere Wulste (13, 14) vorgesehen sind, die in die Weichkomponentendichtung (17, 18; 23) eindrückbar sind.

2. Diagnosesonde nach Anspruch 1, **gekennzeichnet durch** eine oder mehrere Weichkomponentendichtungen (19, 20; 27, 31) an der Außenseite des Grundkörpers (1).

3. Diagnosesonde nach Anspruch 1 oder 2, **dadurch gekennzeichnet, daß** eine oder mehrere oder alle Weichkomponentendichtungen (17-20, 23, 27, 31) an den Grundkörper (1) angespritzt sind.

4. Diagnosesonde nach Anspruch 2 oder 3, **dadurch gekennzeichnet, daß** in dem Grundkörper (1) ein Verbindungskanal (22) für die Weichkomponente vorgesehen ist.

5. Diagnosesonde nach einem der vorhergehenden Ansprüche, **dadurch gekennzeichnet, daß** die Wulste (13, 14) eine flache (15) und eine steile (16) Flanke aufweisen.

6. Diagnosesonde nach einem der vorhergehenden Ansprüche, **dadurch gekennzeichnet, daß** die Weichkomponentendichtung zwischen dem Grundkörper (1) und der Seele (2) als durchgehende Innendichtung (23) ausgestaltet ist.

7. Diagnosesonde nach einem der vorhergehenden Ansprüche, **dadurch gekennzeichnet, daß** die Seele (2) mit einem Kragen (33) versehen ist, der in dem Grundkörper (1) fixierbar ist.

8. Diagnosesonde nach einem der vorhergehenden Ansprüche, **dadurch gekennzeichnet, daß** in dem Grundkörper (1) ein Entgasungsloch (41) vorgesehen ist.

9. Diagnosesonde nach einem der vorhergehenden Ansprüche mit einem Kopf (5), an dem eine Dichtung (27) vorgesehen ist, **dadurch gekennzeichnet, daß** die Dichtung (27) eine radial nach außen weisende Dichtlippe (28) aufweist.

10. Diagnosesonde nach Anspruch 9, **dadurch gekennzeichnet, daß** die Dichtlippe (28) derart verformbar ist, daß sie eine ebene, mit der Oberfläche (50) des Stopfens (37) bzw. der Diagnosesonde fluchtende Fläche (49) bildet.

11. Diagnosesonde nach Anspruch 9 oder 10, **dadurch gekennzeichnet, daß** die Dichtung (27) einen radialen Bereich (29) aufweist.

12. Diagnosesonde nach einem der Ansprüche 9 bis 11, **dadurch gekennzeichnet, daß** die Dichtung (27) einen axialen Bereich (30) aufweist.

13. Diagnosesonde nach einem der Ansprüche 9 bis 12, **dadurch gekennzeichnet, daß** im Abstand von der Dichtung (27) eine weitere Dichtung (31) vorgesehen ist.

14. Bausatz, bestehend aus einer Diagnosesonde nach einem der Ansprüche 1 bis 13 und einem oder mehreren Stopfen, insbesondere Gewindestopfen (37),
**dadurch gekennzeichnet,**
**daß** der Stopfen bzw. Gewindestopfen (37) mit dem Werkzeug für die Diagnosesonde und einem Werkzeugwechseleinsatz herstellbar ist.

15. Batteriedeckel, **gekennzeichnet durch** eine Diagnosesonde nach einem der Ansprüche 1 bis 13 und/oder einen Bausatz nach Anspruch 14.

16. Batteriedeckel nach Anspruch 15, **dadurch gekennzeichnet, daß** im Bereich der Dichtlippe (28) und/oder des axialen Bereichs (30) der Dichtung (27) Schneiden (47) oder Dichtkanten (52) vorgesehen sind.

17. Batterie, **gekennzeichnet durch** eine Diagnosesonde nach einem der Ansprüche 1 bis 13 und/oder einen Bausatz nach Anspruch 14 und/oder einen Batteriedeckel nach Anspruch 15 oder 16.

## Claims

1. Diagnostic probe for a battery, in particular a multi-cell battery,
**characterised by**
- a main body (1), a core (2) arranged therein, and one or more soft sealing components (17, 18; 23) between the main body (1) and the core (2), one or more beads (13, 14) being provided on the outside of the core (2), which beads are pressable into the soft sealing component (17, 18; 23).

2. Diagnostic probe according to claim 1, **characterised by** one or more soft sealing components (19, 20; 27, 31) on the outside of the main body (1).

3. Diagnostic probe according to either of claim 1 or claim 2, **characterised in that** one or more soft sealing components (17-20, 23, 27, 31) are sprayed on to the main body (1).

4. Diagnostic probe according to either of claim 2 or claim 3, **characterised in that** a connecting channel (22) for the soft component is provided in the main body (1).

5. Diagnostic probe according to any one of the preceding claims, **characterised in that** the beads (13, 14) have a flat (15) and a sloped (16) flank.

6. Diagnostic probe according to any one of the preceding claims, **characterised in that** the soft sealing component between the main body (1) and the core (2) is in the form of a continuous internal seal (23).

7. Diagnostic probe according to any one of the preceding claims, **characterised in that** the core (2) is provided with a collar (33) fixable within the main body (1).

8. Diagnostic probe according to any one of the preceding claims, **characterised in that** a degassing aperture (41) is provided within the main body (1).

9. Diagnostic probe according to any one of the preceding claims, with a head (5) on which a seal (27) is provided, **characterised in that** the seal (27) has a radially outwardly oriented sealing lip (28).

10. Diagnostic probe according to claim 9, **characterised in that** the sealing lip (28) is deformable in such a way that it forms a flat area (49) flush with the surface (50) of the plug (37) or of the diagnostic probe.

11. Diagnostic probe according to either of claim 9 or claim 10, **characterised in that** the seal (27) has a radial region (29).

12. Diagnostic probe according to any one of claims 9 to 11, **characterised in that** the seal (27) has an axial region (30).

13. Diagnostic probe according to any one of claims 9 to 12, **characterised in that** another seal (31) is provided at a distance from the seal (27).

14. Kit comprising a diagnostic probe according to any one of claims 1 to 13 and one or more plugs, in particular threaded plugs (37),
**characterised in that**
the plug or threaded plug (37) may be manufactured using the tool for the diagnostic probe and a tool-change socket.

15. Battery cover, **characterised by** a diagnostic probe according to any one of claims 1 to 13 and/or a kit according to claim 14.

16. Battery cover according to claim 15, **characterised in that** cutting edges (47) or sealing edges (52) are provided in the region of the sealing lip (28) and/or of the axial region (30) of the seal (27).

17. Battery, **characterised by** a diagnostic probe according to any one of claims 1 to 13 and/or a kit according to claim 14 and/or a battery cover according to either of claim 15 or claim 16.

## Revendications

1. Sonde de diagnostic pour une batterie, notamment une batterie à plusieurs éléments,
**caractérisée par**
un corps de base (1) une âme (2) disposée à l'intérieur et un ou plusieurs composants souples d'étanchéité à (17, 18, 23) entre le corps de base (1) et l'âme (2), un ou plusieurs bourrelets (13, 14) étant prévus sur le côté extérieur de l'âme (2), qui peuvent être enfoncés dans les le joint d'étanchéité à composant souple (17, 18, 23).

2. Sonde de diagnostic selon la revendication 1, **caractérisée par** un ou plusieurs composants souples d'étanchéité (17, 18, 23) sur le côté extérieur du corps de base (1).

3. Sonde de diagnostic selon la revendication 1 ou 2, **caractérisée en ce que** l'un ou plusieurs voire la totalité des composants souples d'étanchéité (17, 18, 23) sont déposés par pulvérisation sur le corps de base (1).

4. Sonde de diagnostic selon la revendication 2 ou 3, **caractérisée en ce qu'**un canal de liaison (22) est prévu sur le corps de base (1) pour les composants souples.

5. Sonde de diagnostic selon l'une des revendications précédentes, **caractérisée en ce que** les bourrelets (13, 14) présentent un flanc plat (15) et un flanc oblique (16).

6. Sonde de diagnostic selon l'une des revendications précédentes, **caractérisée en ce que** les composants souples d'étanchéité sont agencés entre le corps de base (1) et l'âme (2) comme joint continu(23).

7. Sonde de diagnostic selon l'une des revendications précédentes, **caractérisée en ce que** l'âme (2) est pourvue d'un collet (33) qui peut être fixé dans le corps de base (1).

8. Sonde de diagnostic selon l'une des revendications précédentes, **caractérisée en ce qu'**un trou de dégazage (41) est prévu dans le corps de base (1).

9. Sonde de diagnostic selon l'une des revendications précédentes, avec une tête (5) sur laquelle est prévu un joint d'étanchéité (27), **caractérisée en ce que** le joint d'étanchéité (27) présente une lèvre d'étanchéité (28) orientée radialement vers l'extérieur.

10. Sonde de diagnostic selon la revendication 9, **caractérisée en ce que** la lèvre d'étanchéité (28) est déformable de manière à former une surface plane (49) alignée avec la surface supérieure (50) du bouchon (37) ou de la sonde de diagnostic.

11. Sonde de diagnostic selon la revendication 9 ou 10, **caractérisée en ce que** le joint d'étanchéité (27) présente une zone radiale (29)

12. Sonde de diagnostic selon l'une des revendications 9 à 11, **caractérisée en ce que** le joint d'étanchéité (27) présente une zone axiale (30).

13. Sonde de diagnostic selon l'une des revendications 9 à 12, **caractérisée en ce qu'**un autre joint d'étanchéité (31) est prévu, écarté du joint d'étanchéité (27).

14. Kit constitué d'une sonde de diagnostic selon l'une des revendications 1 à 13 et d'un ou de plusieurs bouchons, notamment des bouchons filetés (37)
**caractérisé en ce que**
le bouchon ou le bouchon fileté (37) est fabriqué au moyen de l'outil pour la sonde de diagnostic et un système de changement d'outils

15. Couvercle de batterie **caractérisé par** une sonde de diagnostic selon l'une des revendications 1 à 13 et/ou un kit selon la revendication 14.

16. Couvercle de batterie selon la revendication 15, **caractérisé en ce que** des reliefs tranchants (47) ou des bords d'étanchéité (52) sont prévus dans la zone de la lèvre d'étanchéité (28) et/ou de la zone axiale (30) du joint d'étanchéité (52).

17. Batterie **caractérisée par** une sonde de diagnostic selon l'une des revendications 1 à 13 et/ou un kit selon la revendication 14 et/ou un couvercle de batterie selon la revendication 15 ou 16.
